Europäisches Patentamt

European Patent Office

Office européen des brevets

(11) Numéro de publication : **0 279 741 B1**

## (12) FASCICULE DE BREVET EUROPEEN

(45) Date de publication du fascicule du brevet :
**18.09.91 Bulletin 91/38**

(51) Int. Cl.⁵ : **G21C 19/36**

(21) Numéro de dépôt : **88400327.8**

(22) Date de dépôt : **15.02.88**

(54) **Procédé et dispositif pour couper des éléments combustibles irradiés en position horizontale à l'aide d'un chariot porte-lame.**

(30) Priorité : **17.02.87 FR 8702027**

(43) Date de publication de la demande :
**24.08.88 Bulletin 88/34**

(45) Mention de la délivrance du brevet :
**18.09.91 Bulletin 91/38**

(84) Etats contractants désignés :
**BE DE ES GB IT SE**

(56) Documents cités :
**EP-A- 0 061 396**
**DE-C- 3 220 802**
**FR-A- 2 324 094**
**FR-A- 2 468 977**
**LU-A- 56 293**

(73) Titulaire : **SOCIETE GENERALE POUR LES TECHNIQUES NOUVELLES S.G.N. Société anonyme dite:**
**1, rue des Hérons Montigny-le-Bretonneux**
**F-78184 Saint-Quentin-en-Yvelines Cédex (FR)**

(72) Inventeur : **Tucoulat, Daniel**
**67 rue du Professeur Calmette**
**F-95240 Cormeilles en Parisis (FR)**

(74) Mandataire : **Combe, André et al**
**CABINET BEAU DE LOMENIE 55, rue d'Amsterdam**
**F-75008 Paris (FR)**

Jouve, 18, rue Saint-Denis, 75001 PARIS

## Description

L'invention concerne un procédé et un dispositif de coupe des éléments combustibles irradiés -encore appelé cisaillage (pour le procédé) et cisaille (pour le dispositif)-, les éléments combustibles étant en position horizontale lors de la coupe.

Après leur utilisation en réacteur, les éléments combustibles irradiés sont, après désactivation, transportés dans les installations de retraitement, où ils sont stockés puis soumis à divers traitements dans le but d'extraire les matières radioactives qui seront confinées et stockées selon les règles de sûreté en vigueur pour assurer la protection des hommes et de l'environnement.

Chaque élément combustible, quelle que soit sa provenance : réacteur REP (PWR), REB (BWR)..., comprend deux pièces métalliques appelées embouts, entre lesquelles sont maintenus les crayons combustibles.

Par exemple, pour les réacteurs REP (PWR), les crayons combustibles, au nombre de plusieurs centaines, sont constitués par des tubes métalliques de 1 à 1,5 cm de ciamètre et de plusieurs mètres de long qui contiennent le combustible, ces tubes sont maintenus parallèles entre eux par des entretoises métalliques transversales et sont engagés à leur extrémité dans chaque embout, la section transversale de l'élément peut être un carré de 30 cm de côté environ.

La première étape du retraitement consiste à couper l'élément combustible dans une cellule de cisaillage : coupe des embouts et coupe des crayons. Les crayons coupés obtenus sont envoyés au dissolveur dans lequel l'acide nitrique chaud dissout le combustible tandis que les parties métalliques ne sont pas attaquées.

Pour ne pas endommager et encombrer inutilement le dissolveur, les embouts doivent être évacués séparément des crayons vers un lieu de traitement spécifique (lavage, compactage, enrobage...).

Un premier moyen pour ce faire consiste à couper les embouts et les crayons dans des lieux différents. Ainsi, dans le brevet FR-A-1.587.331, les deux embouts sont sciés à un poste de sciage puis l'élément combustible est déplacé sur des balancelles pour être amené au poste de coupe des crayons. De cette maniére, les évacuations des embouts et des crayons sont séparées.

Pour éviter d'avoir à déplacer l'élément sans ses embouts, ce qui nécessite des précautions particulières pour le maintien en place des crayons, il a été conçu dans le brevet FR-A-2 324 094 procédé et un dispositif associé applicables à des éléments combustibles entiers (dont les embouts n'ont pas été préalablement séparés), procédé dans lequel le premier embout (le plus proche de la section de coupe) est séparé des crayons, les crayons sont coupés puis le dernier embout est évacué, les embouts et les crayons étant coupés par la même lame et évacués par la même ouverture.

Cette réalisation sera mieux décrite à partir des figures suivantes :

- figures 1 et 2 : montrant la technique enseignée selon le brevet FR-A-2 324 094 ;
- figures 3 à 6 : représentant le procédé selon l'invention en deux modes de réalisation différents ;
- figures 7 à 10 : montrant un mode de réalisation du dispositif selon l'invention.

Le brevet FR-A-2 324 094 s'applique à des éléments combustibles en position de coupe verticale ou horizontale.

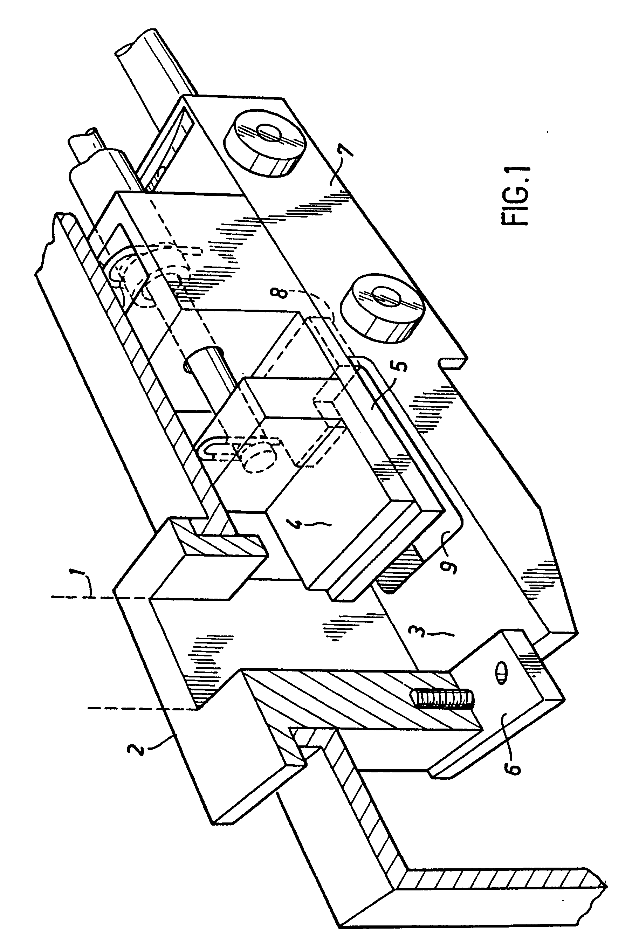

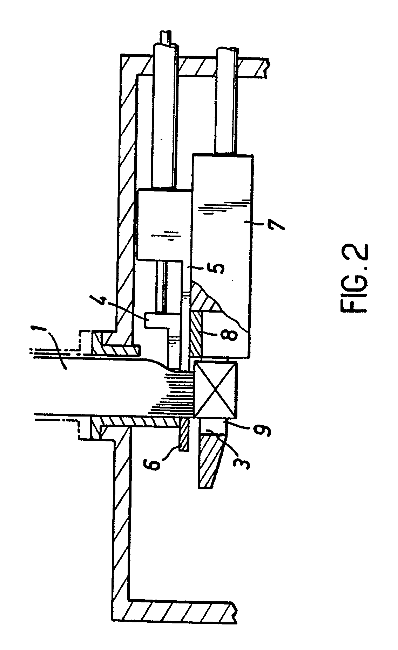

Plus précisément, sur les figures 1 et 2 illustrant ledit brevet, l'élément combustible entier 1 est introduit en position verticale dans un tube guide 2 muni de moyens pour retenir et déplacer l'élément, l'élément est en appui sur la plaque de sécurité 3. Il est ensuite serré à l'aide de 2 serre-flancs 4 et 5 contre une contre-lame 6 solidaire du tube guide, on agit d'abord sur le serre-flanc 4 dit serre-flanc auxiliaire le plus éloigné de la section de coupe pour exercer une poussée suffisante pour limiter la courbure de l'élément puis on agit sur l'autre serre-flanc 5 dit serre-flanc principal pour que les tubes deviennent jointifs à proximité de la section de coupe. Le chariot porte-lame 7 qui roule sur des rails situés sous ledit chariot est alors déplacé de façon que la lame 8 vienne, en coopérant avec la contre-lame 6 couper l'élément : la surface supérieure de la lame 8 est alors sensiblement au même niveau que la surface inférieure de la contre-lame 6. Le chariot revient à sa position initiale de façon que la plaque de sécurité 3 se trouve sous l'élément, les serre-flancs sont desserrés, l'élément est avancé de la longueur voulue, les serre-flancs sont resserrés, une nouvelle coupe a lieu etc...

Les embouts et crayons coupés tombent par une ouverture 9 située en avant de la lame de coupe, et sur la figure 1 pratiquée dans la pièce métallique formant plaque de sécurité, l'ouverture se trouve dans ce cas entre la plaque de sécurité et la lame. Il est alors nécessaire de prévoir au-dessous de l'ouverture des moyens pour l'évacuation des embouts d'un côté et des crayons de l'autre.

Dans les installations actuelles, l'un au moins des moyens d'évacuation est mobile. Ainsi par exemple, le moyen d'évacuation des embouts est constitué par un tiroir amovible placé au-dessus du moyen d'évacuation des crayons coupés fixe relié au dissolveur. Pour la coupe des embouts, le tiroir est placé au-dessus du moyen d'évacuation des crayons et obstrue son accès. L'embout coupé tombe dans le tiroir, le tiroir est déplacé libérant l'accès au moyen d'évacuation des crayons, la coupe des crayons est effectuée, le tiroir est replacé pour la récupération du dernier embout.

Le tiroir se déplace sur des moyens de roulement (rails...). Or, pendant la coupe avec un dispositif selon le brevet FR-A-2 324 094, des crayons coupés, des éclats métalliques et des poussières (de combustible et métalliques) peuvent être projetés autour de la lame et venir encombrer les moyens de roulement gênant ainsi les déplacements du tiroir et également ceux du chariot porte-lame.

Pour remédier à ces inconvénients, l'invention propose un procédé et un dispositif associé, dans lesquels les moyens d'évacuation sont fixes et lors de la coupe les crayons sont confinés dans une cavité.

Plus précisément, l'invention a pour objet un procédé de coupe d'élément combustible irradié en position horizontale dans lequel l'élément combustible est maintenu sur un support de façon à présenter sa section transversale à la coupe, ledit élément pouvant être déplacé selon son axe longitudinal des longueurs voulues, l'élément est également comprimé à proximité immédiate de la section de coupe au moyen d'au moins un serre-flanc, la coupe étant effectuée par des moyens de coupe se déplaçant sensiblement perpendiculairement à l'axe longitudinal de l'élément et coopérant avec une contre-lame fixe, et entre deux coupes, le serre-flanc est desserré, l'élément est avancé de la longueur de coupe voulue, le serre-flanc est resserré, caractérisé en ce que :

– chacun des embouts est coupé séparément par le moyen de coupe des embouts, et chacun desdits embouts tombent dans le moyen d'évacuation des embouts qui est fixe ;

– les crayons sont ensuite coupés par le moyen de coupe des crayons, la coupe étant effectuée de façon que la section de coupe des crayons soit dans ou en limite d'une cavité pour que les crayons coupés dans ladite cavité soient confinés de ladite cavité ;

– et que les crayons coupés sont évacués et dirigés vers le moyen d'évacuation des crayons par une ouverture basse de ladite cavité, ledit moyen étant fixe.

Selon ledit procédé, l'élément est débarrassé de l'un ou de ses deux embouts puis les crayons sont coupés dans la cavité. Les deux embouts peuvent être séparés par tout moyen de coupe adapté à la coupe des embouts puis les crayons sont coupés.

Les moyens d'évacuation des embouts et des crayons sont distincts et situés à poste fixe sous les moyens de coupe respectifs pour que les embouts et les crayons y tombent.

Selon une disposition particulièrement avantageuse, le premier embout est coupé par le moyen de coupe des embouts, les crayons sont coupés par le moyen de coupe des crayons, puis le second embout est récupéré.

Dans ce cas, l'élément est à poste fixe, c'est-à-dire qu'il n'est pas déplacé entre la coupe de l'embout et la coupe des crayons : l'élément est placé sur le support, il ne se déplace que selon son axe longitudinal, ce sont les moyens de coupe qui sont mobiles.

Selon ce procédé préférentiel

– le premier embout est coupé par l'arête avant du chariot porte-lame de coupe des embouts, ladite arête constituant la lame de coupe des embouts et coopérant avec une contre-lame de coupe des embouts fixe lors de la coupe, ledit chariot se déplaçant au-dessus du moyen d'évacuation des embouts, ledit moyen étant fixe ;

– l'élément est ensuite avancé de façon à venir insérer sa section transversale sur une longueur égale à la longueur de coupe des crayons, dans une cavité du chariot porte-lame de coupe des crayons ;

– les crayons combustibles sont coupés lors du déplacement du chariot porte-lame des crayons par une lame de coupe des crayons fixée dans ladite cavité et coopérant avec une contre-lame de coupe des crayons fixe lors de la coupe, de façon que la section de coupe des crayons soit dans ou en limite de la cavité, et que les crayons coupés soient évacués et dirigés vers le moyen d'évacuation des crayons par une ouverture basse de la cavité, ledit moyen étant fixe.

On comprendra mieux le procédé par la description des opérations successives mises en oeuvre sur l'élément combustible à découper déjà amené de son lieu de stockage à la cellule du cisaillage.

1. Placement de l'élément en position de coupe

L'élément est placé horizontalement sur un support sur lequel il est maintenu rigidement et de façon à permettre les déplacements selon l'axe longitudinal mais à éviter tout déplacement latéral.

Ce support peut être simplement une table munie de moyens de guidage ou un tube guide par exemple. Un moyen de guidage intéressant, pouvant également constituer un support, est un magasin formé de plaques métalliques rigides, ouvert à au moins une extrémité par laquelle est introduit l'élément combustible. Le magasin présente l'avantage, lorsqu'il est indépendant du dispositif de coupe, de pouvoir être déplacé et notamment de pouvoir servir au transport de l'élément de son lieu de stockage (où il est en position verticale) à celui de cisaillage (où il est en position horizontale) donc de pouvoir être disposé dans n'importe quelle position.

Les moyens de déplacement de l'élément selon son axe longitudinal de façon, notamment, à le faire avancer des longueurs de coupe voulues peuvent être un vérin ou mieux une chaîne pousseuse placée dans le magasin, ces deux moyens agissant sur le dernier embout (le plus éloigné de la section de coupe).

La chaîne pousseuse est en général munie d'un grappin qui s'accroche sur l'embout de l'élément, ce qui permet le passage par une position verticale et également de recul de l'élément, tout moyen d'accrochage adapté à l'élément convient.

Lors de la mise en place de l'élément en position de coupe et lors de la coupe, il est nécessaire de passer par une position de référence à partir de laquelle seront comptabilisées les longueurs de déplacement de l'élément et à partir de laquelle les autres déplacements seront asservis (déplacements des serre-flancs et chariots) par l'intermédiaire des organes de commande.

Selon une autre caractéristique de l'invention, la position de référence est obtenue par avancée de l'élément jusqu'à venir en appui sur une plaque de référence placée à proximité immédiate de la section de coupe. Ladite plaque est avantageusement constituée par la face du serre-flanc principal (le plus proche de la section de coupe du premier embout) située en vis-à-vis de l'élément.

Les longueurs de déplacement de l'élément sont la longueur de coupe du premier embout et la longueur de coupe des crayons (avancée de l'élément) corrigées éventuellement des faibles longueurs de recul nécessaires par exemple pour ôter la plaque de référence, déplacer un chariot....

Pour le dernier embout restant, la longueur de déplacement de l'élément sera celle nécessaire pour évacuer ledit embout.

Les longueurs de coupe des embouts et crayons dépendent du type d'élément combustible : selon le réacteur pour lequel il a été conçu, sa géométrie, son agencement, sa structure mécanique ont pu varier, de même la façon dont il a été utilisé peut aussi avoir une influence sur la dissolution.

La longueur de coupe des embouts ne correspond pas à une valeur très précise. En effet, les tubes ne sont pas chargés en combustible jusqu'à leurs extrémités ; il demeure après l'embout un espace dépourvu de combustible dans lequel la coupe a lieu.

Il est intéressant de la faire le plus près possible du combustible mais en évitant d'entraîner avec l'embout de la matière combustible, matériau très radioactif qui obligerait l'exploitant à mettre en place des traitements et moyens technologiques supplémentaires onéreux pour conditionner les embouts. La longueur de coupe des crayons dépend principalement des conditions de la réaction de dissolution postérieure à la coupe. En effet, pour qu'elle soit la plus complète possible de façon que les coques (tubes métalliques coupés non solubles) retirées du dissolveur ne contiennent plus de combustible, il faut que les extrémités des crayons coupés soient suffisamment ouvertes pour permettre le passage de l'acide nitrique et il faut également que les longueurs de crayons coupés ne soient pas trop importantes pour que le temps de séjour dans le dissolveur soit compatible avec les cadences de l'installation.

Les longueurs de coupe sont choisies par l'homme de l'art selon ses connaissances habituelles.

L'élément est amené en position de coupe de l'embout, par avancée de la longueur de coupe de l'embout à partir de la position de référence, serre-flanc(s) desserré(s) et plaque de référence ôtée.

## 2. Coupe du premier embout

Elle a lieu de la façon suivante :
– serrage du (des) serre-flanc(s) associé(s) à la section de coupe de l'embout ;
– coupe du premier embout et chute du premier embout dans le moyen d'évacuation des embouts.

A la section de coupe de l'embout un ou plusieurs serre-flancs peuvent être associés, deux par exemple, ainsi que décrit dans le brevet FR-A-2 324 094.

Selon l'invention, la coupe de l'embout est effectuée au moyen d'une lame de coupe des embouts montée sur un chariot porte-lame de coupe de l'embout et plus précisément cette lame est constituée par l'arête du chariot porte-lame placée en vis-à-vis de l'élément, ladite lame coopérant avec une contre-lame fixe.

Le plan de coupe de l'embout est le plan parallèle à la section transversale de l'élément et passant par l'arête de la contre-lame de coupe des embouts située contre l'élément combustible. La section de coupe de l'embout est l'intersection de la section transversale de l'élément avec ledit plan de coupe.

Ledit chariot est placé selon l'invention au-dessus du moyen d'évacuation des embouts de sorte que le premier embout venant d'être coupé chute directement dans son moyen d'évacuation.

L'élément combustible, dépourvu de son premier embout, présente alors à la coupe sur sa section transversale les crayons combustibles.

## 3. Coupe des crayons

Elle se déroule selon la série d'opérations suivantes :
– déplacement du chariot porte-lame de coupe des crayons pour amener sa cavité vis-à-vis de l'élément ;
– desserrage de(s) serre-flanc(s) associé(s) au(x) plan(s) de coupe ;
– insertion de l'élément de la longueur de coupe choisie pour les crayons ;
– serrage du (des) serre-flanc(s) associé(s) au plan de coupe des crayons ;
– déplacement du chariot porte-lame de coupe des crayons pour couper les crayons.

Ce cycle est répété jusqu'à ce que toutes les parties de tubes contenant du combustible aient été sectionnées et récupérées pour être envoyées à la dissolution. Donc la coupe effectuée au niveau de l'espace non chargé en combustible constitue la dernière opération de la coupe des crayons.

La cavité créée dans le chariot porte-lame devra avoir une longueur (dimension dans le sens de la coupe) et une hauteur (per pendiculaire au sens de la coupe et à l'axe longitudinal de l'élément) au moins égales à la dimension correspondante de l'élément combustible en vis-à-vis de façon que la section transversale non comprimée de l'élément puisse venir s'insérer dans la cavité. Sa profondeur est au moins égale à la longueur de coupe des crayons.

Lors de l'insertion de l'élément dans la cavité, on place un côté de l'élément au contact de la paroi opposée à la lame, de sorte que,le(s) serre-flanc(s) associé(s) étant serré(s), les tubes viennent en appui contre ladite paroi où ils forment alors une "botte" de tubes jointifs de dimensions réduites et délimitées prête à être coupée.

La lame de coupe des crayons est fixée dans la cavité, elle est orientée pour que la direction de coupe soit parallèle et dans la direction de la poussée du (des) serre-flanc(s) associé(s) au plan de coupe des crayons.

De préférence, ladite lame constitue une paroi de la cavité de façon à mieux résister aux efforts de coupe. Il est également avantageux pour des raisons de maintenance de concevoir une lame pouvant être montée et démontée à distance.

La lame de coupe des crayons coopère pour couper avec une contre-lame fixe, ladite contre-lame a par conséquent une hauteur au moins égale à celle de la cavité.

Le plan de coupe des crayons est alors constitué par le plan perpendiculaire à l'axe longitudinal de l'élément, passant par l'arête de la contre-lame (proche de l'élément) et parallèle au déplacement du chariot. La section de coupe est l'intersection de la section transversale de l'élément avec ce plan.

La coupe des crayons a alors lieu dans la cavité. Les morceaux de crayons à couper sont dans la cavité qui est fermée de tous les côtés par la lame, sa paroi opposée à la lame, sa paroi supérieure,par l'élément combustible et par la contre-lame lorsque le chariot se déplace.

Les crayons coupés, confinés dans la cavité, tombent par son ouverture basse dans le moyen d'évacuation des crayons placé à poste fixe en dessous de la lame de coupe des crayons.

Plus précisément, lorsque les plans de coupe des embouts et crayons sont confondus, c'est-à-dire lorsque les lames coopèrent avec la même contre-lame, le chariot porte-lame des embouts se déplaçant au-dessus du moyen d'évacuation des embouts, il est indispensable de munir, selon l'invention, l'ouverture basse de la cavité d'une paroi inclinée, vers le moyen d'évacuation des crayons, jouant le rôle de déflecteur, pour diriger les crayons coupés vers leur moyen d'évacuation et éviter qu'ils ne tombent dans le moyen d'évacuation des embouts. On a alors intérêt à placer le moyen d'évacuation des crayons le plus près possible de celui des embouts.

Par contre, lorsque les deux plans de coupe sont distincts, chaque moyen d'évacuation est placé au-dessous du plan de coupe correspondant, de sorte que le déflecteur n'est pas forcément nécessaire.

### 4. Récupération du dernier embout

Il reste de l'élément combustible, après la dernière coupe des crayons, le dernier embout seulement sur lequel agit le moyen de déplacement de l'élément et sur lequel est serré le(s) serre-flanc(s).

Le(s) serre-flanc(s) étant desserré(s), le moyen de déplacement de l'élément est actionné, de façon que l'embout vienne au-dessus du moyen d'évacuation des embouts et tombe dans ledit moyen d'évacuation.

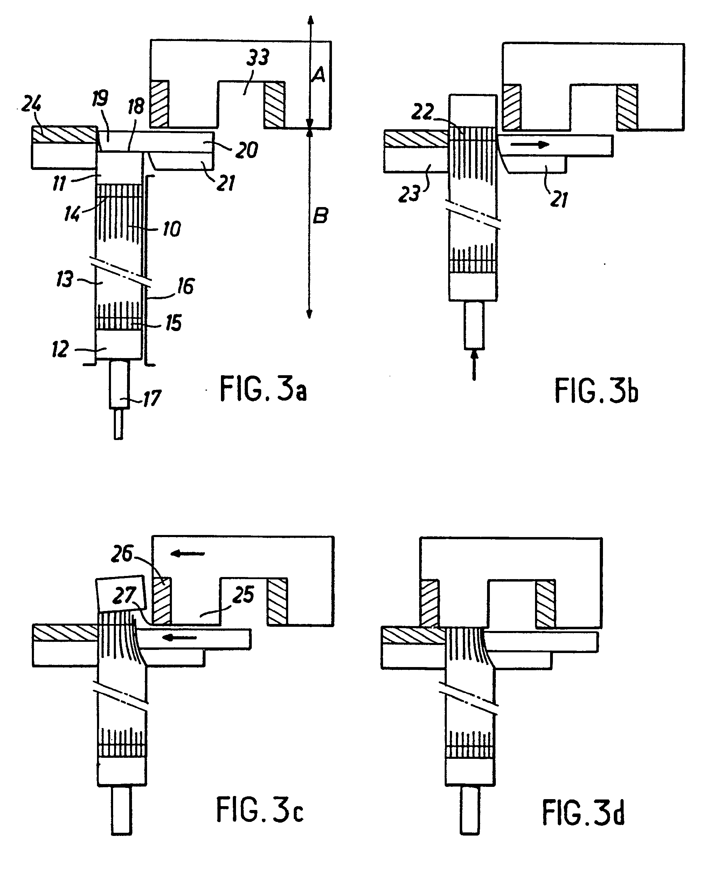

Le procédé ci-dessus décrit est maintenant illustré à l'aide des figures 3 à 6. Elles montrent plus précisément la coupe d'un élément combustible placé horizontalement selon une vue de dessus.

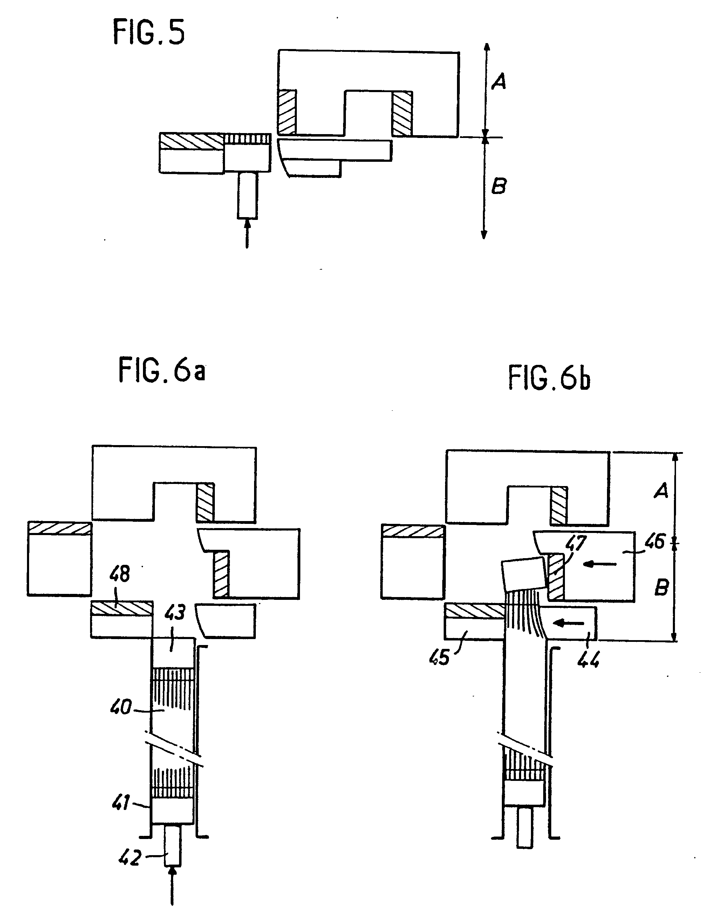

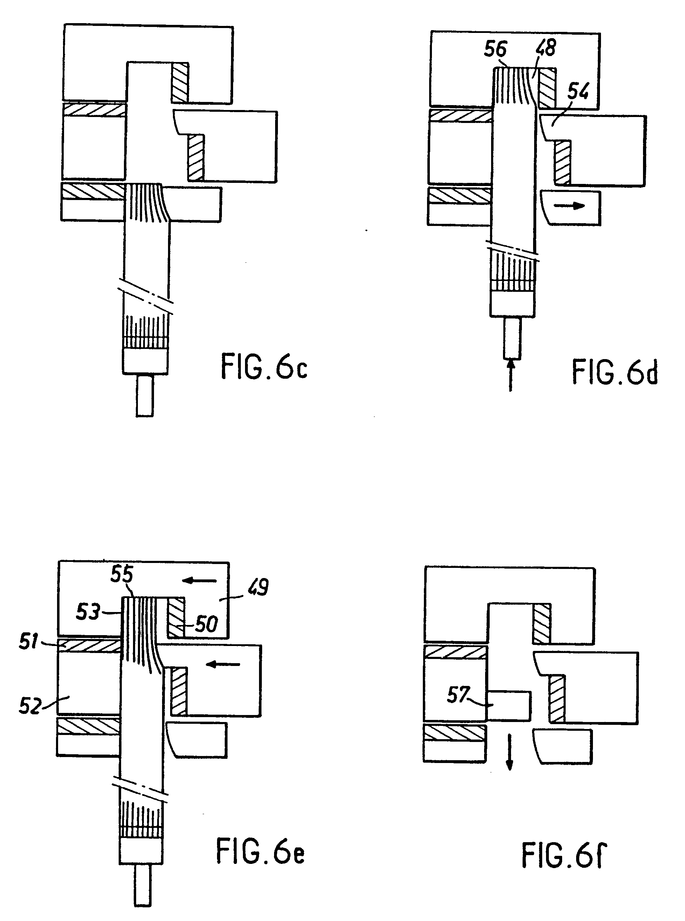

Les figures 3 à 5 représentent en détail les étapes de la coupe d'un élément entier avec un seul chariot porte-lame muni des lames de coupe des embouts et des crayons a lors que sur la figure 6 chaque lame est montée sur un chariot porte-lame différent.

L'élément combustible 10 (figure 3a) comprend un premier embout 11 et un dernier embout 12 entre lesquels sont placés les crayons combustibles 13, leur chargement en combustible se situant entre les traits repères 14 et 15.

Les moyens de guidage sont représentés très sommairement par le cadre 16 et les moyens de déplacement de l'élément selon son axe longitudinal par le repère 17. Pour plus de simplicité on n'a pas repris en général ces éléments dans les autres figures.

Selon la figure 3a, l'élément est en position de référence avec l'extrémité 18 de son premier embout au contact de la face 19 du serre-flanc principal 20, le serre-flanc auxiliaire 21 demeurant non serré. On aurait pu tout aussi bien représenter un seul serre-flanc de forme adéquate remplissant à lui seul les fonctions des deux autres serre-flancs.

Le serre-flanc 20 revenant à sa position de repos, l'élément est avancé de la longueur de coupe des embouts pour que le premier embout vienne se placer en position de coupe (figure 3b), le repère 14 de chargement en combustible se situant au-delà de la section de coupe 22 de l'embout et du côté de l'élément.

Les serre-flancs sont alors poussés contre la butée 23 constituée ici par le support de la contre-lame 24. Ainsi, les tubes sont jointifs selon la figure 3c à proximité immédiate de la section de la coupe. La simple poussée des serre-flancs arrache déjà une partie des tubes.

Le chariot porte-lame 25 est alors déplacé parallèlement à la section transversale de l'élément de façon que la lame de coupe des embouts 26 placée sur l'arête 27 du chariot coupe l'embout selon la section de coupe 22 en coopération avec la contre-lame 24.

La figure 3d montre l'élément débarrassé de son embout.

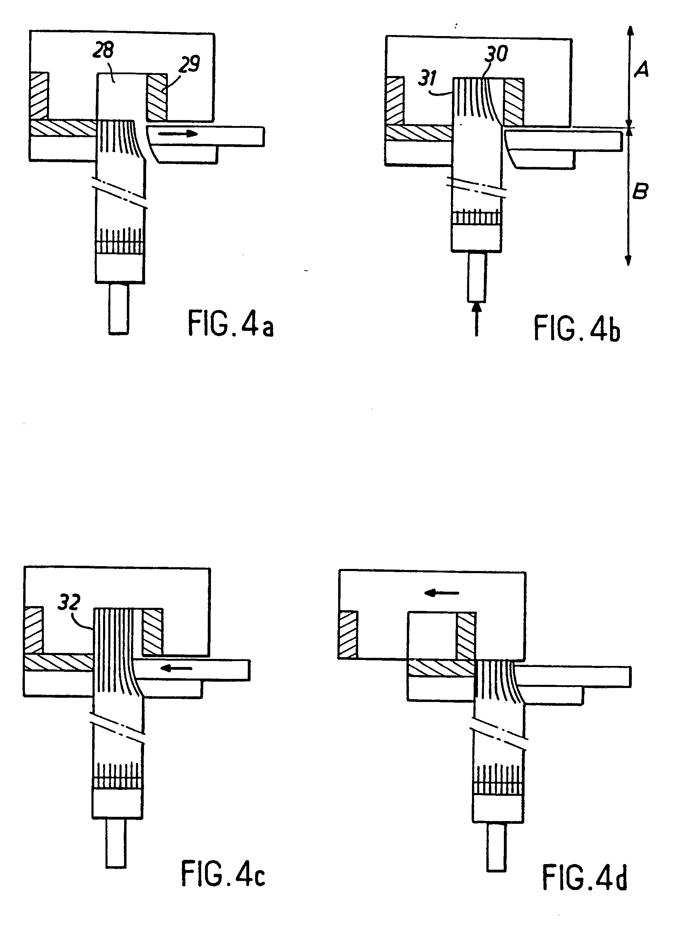

Le chariot est alors déplacé (figure 4a) jusqu'à amener la cavité 28 placée devant la lame de coupe des crayons 29 en vis-à-vis de l'élément et de façon que, après desserrage des serre-flancs, l'élément puisse être avancé dans ladite cavité.

Sur la figure 4b, l'élément a été poussé dans la cavité de la longueur de coupe des crayons voulue. Il vient ou non en butée sur la paroi 30 de la cavité opposée à l'élément. De préférence, il est au contact de la paroi 31 opposée à la lame.

Les serre-flancs sont alors actionnés (figure 4c). L'élément se trouve comprimé à proximité de sa section de coupe, les tubes sont repoussés contre la paroi 31.

Le chariot est déplacé (figure 4d), la lame coupe les crayons selon la section de coupe 32 en coopération avec la contre-lame 24.

Le chariot revient à sa position de coupe des crayons (figure 4a) et ainsi de suite.

Lorsque la section de coupe 32 des crayons se situe entre la limite de chargement des crayons (repère 15) et l'embout 12, le chariot porte-lame, au lieu de retourner en position 4a, revient en position de repos 3a, libérant un espace permettant le passage de l'embout.

Le dernier embout est alors poussé de façon à le faire chuter dans le moyen d'évacuation des embouts. (figure 5).

Les embouts tombent directement dans le moyen d'évacuation A des embouts. Les crayons sont dirigés vers leur moyen d'évacuation B au moyen de la paroi déflectrice 33 montée sur l'ouverture basse de la cavité (paroi représentée sur la figure 3a seulement pour simplifier).

La figure 6 représente un autre mode de réalisation du procédé selon l'invention dans lequel chaque lame est portée par un chariot porte-lame particulier.

L'élément combustible 40 est placé horizontalement sur le support 41 muni de ses moyens de guidage, il est déplacé selon son axe longitudinal par les moyens de déplacement 42 (figure 6a).

On n'a pas représenté la position de référence, elle est avantageusement obtenue de la même façon que dans la variante précédente.

Pour la coupe du premier embout 43, le serre-flanc 44 associé au plan de coupe de l'embout est serré contre le support 45 de contre-lame de coupe de l'embout (figure 6b).

On n'a représenté qu'un seul serre-flanc avec une face extrême de forme courbée qui donne la courbure souhaitée à l'élément.

Le chariot 46 porte sur son arête avant la lame de coupe des embouts 47 qui coopère avec la contre-lame 48, l'embout coupé tombe dans le moyen d'évacuation B des embouts placé au-dessous du plan de coupe de l'embout (figure 6c).

Le serre-flanc 44 étant desserré (figure 6d), l'élément est avancé dans la cavité 48 du chariot portant la lame 50 de coupe des crayons. Cette lame coopère pour la coupe avec la contre-lame 51 montée sur un support 52 (figure 6e).

Lors de la coupe du premier embout, le support 52 est éloigné de l'axe longitudinal de l'élément de façon que le chariot 46 puisse se déplacer pour assurer la coupe et que l'embout coupé puisse tomber.

Pour la coupe des crayons, le support 52 est rapproché de façon à placer la contre-lame 51 contre l'élément à couper. Cette disposition permet également de guider l'élément lors de son avancée vers le chariot 49.

Afin de soutenir l'élément, qui est sorti de son support sur une assez grande longueur, et éviter que les crayons ne se dispersent, on peut munir le support 52 d'une plaque de soutien (non représentée sur les figures) disposée dans le prolongement du support. Ainsi, le support 52 étant mobile, la plaque de soutien ne vient en place que lors de la coupe des crayons et ne gêne pas la chute des embouts.

De la même façon que dans la variante précédente, l'élément est introduit dans la cavité de sa longueur de coupe et de préférence il est au contact de la paroi 53 de cette cavité.

Le serre-flanc 54 associé au plan de coupe des crayons est serré pour que les crayons forment une "botte" 55 dans la cavité.

Dans cette variante, le chariot 46 portant la lame de coupe des embouts porte également le serre-flanc 54 associé au plan de coupe des crayons. Ces deux éléments auraient pu tout aussi bien être séparés. Evidemment, la lame de coupe des embouts est placée sur la face avant du chariot en retrait de la face extrême du serre-flanc.

La figure 6d montre les crayons au contact de la paroi 56, c'est-à-dire que la cavité a une profondeur égale à la longueur de coupe des crayons. Si cette disposition peut être avantageuse, elle n'est pas obligatoire.

Les crayons coupés tombent dans le moyen d'évacuation A placé au-dessous du plan de coupe des crayons. Avantageusement, et pour apporter une sécurité supplémentaire, l'ouverture basse de la cavité peut être munie d'une paroi déflectrice mais sans que cette disposition soit obligatoire, les moyens d'évacuation pouvant être suffisamment séparés.

A la fin de la coupe des crayons, le dernier embout 57 (fig. 6f) est amené (s'il n'y est pas) au-dessus du moyen d'évacuation des embouts B où il tombe.

La présente invention a également pour objet un dispositif pour mettre en oeuvre le procédé décrit précédemment.

Le dispositif selon l'invention comprenant :

– un support sur lequel est maintenu l'élément qui présente sa section transversale à la coupe ;

– des moyens agissant sur ledit élément et commandés de façon à faire avancer l'élément des longueurs voulues dans la direction de son axe longitudinal ;

– au moins un serre-flanc mobile placé à proximité immédiate de chaque plan de coupe et en vis-à-vis d'une butée, de façon à comprimer les parties de l'élément placées entre, la coupe ayant lieu immdiatement derrière ces parties comprimées ;

– des moyens de coupe des crayons et des embouts ;

– des moyens pour évacuer les embouts et des moyens pour évacuer les crayons coupés vers le dissolveur ;

– des moyens de commande automatique est caractérisé en ce que le moyen de coupe des crayons, distinct de celui des embouts, est logé dans ou en limite d'une cavité de façon que la section de coupe des crayons soit dans ou en limite de ladite cavité qui comporte une ouverture basse par laquelle sont évacués les crayons coupés, les moyens d'évacuation des embouts et des crayons étant distincts et fixés sous le dispositif.

Un mode de réalisation préféré de ce dispositif pour mettre en oeuvre le procédé selon l'invention dans sa disposition avantageuse de coupe de l'élément à poste fixe a les caractéristiques suivantes :

– le moyen de coupe des embouts est constitué par une lame de coupe des embouts portée par l'arête avant (dans le sens du déplacement pour couper) d'un chariot porte-lame de coupe des embouts ;

– le moyen de coupe des crayons est constitué par une lame de coupe des crayons située dans un évidement aménagé sur la face d'un chariot porte-lame de coupe des crayons, ladite lame étant placée de façon à laisser en avant (dans le sens de la coupe) de sa face coupante une cavité de longueur et de hauteur moins égales aux dimensions correspondantes de l'élément en vis-à-vis, ladite cavité ayant une profondeur au moins égale à la longueur de coupe des crayons ;

– ladite cavité comporte une ouverture basse pour évacuer et diriger les crayons vers le moyen d'évacuation des crayons placé à proximité du plan de coupe des crayons ;

– les chariots porte-lame de coupe des embouts et des crayons se déplacent sur des moyens de guidage disposé de façon que le chariot porte-lame de coupe des embouts se déplace au-dessus du moyen d'évacuation des embouts, et

– lesdits moyens d'évacuation sont fixés sous ledit dispositif.

Pour que la lame résiste mieux aux efforts de coupe, on la place de préférence contre une paroi de l'évidement.

Avantageusement, les lames utilisées ont une face coupante en biais : de préférence, elle comporte des couteaux agencés en escalier, il est possible de prévoir également des dents de scie. Toutes ces lames permettent une meilleure répartition des efforts de coupe. Une optimisation à partir de calculs et d'essais conduit à une forme particulièrement adaptée, par exemple à une lame avec un certain nombre de couteaux et un espacement variable entre les couteaux selon leur position.

Il est également intéressant de prévoir une lame montable et démontable à distance (dite télédémontable). En effet, la coupe des éléments combustibles irradiés ayant lieu dans une cellule fermée inaccessible à l'homme, et les lames usées devant être remplacées, il est préférable, pour des raisons de manutention et de sûreté, de changer da lame directement plutôt que d'avoir à sortir de la cellule le chariot porte-lame des crayons.

Dans ce but, selon une autre caractéristique de la présente invention, la lame est fixée sur un support. Le support a des formes lui permettant de s'emboîter exactement dans un évidement aménagé sur une face du chariot porte-lame de coupe des crayons et sur toute la hauteur de ladite face. Ledit support peut être monté et démonté à distance, des moyens de verrouillage télémanipulables permettent de le solidariser au chariot.

Les chariots porte-lame se déplacent sur des moyens de guidage pouvant être des rails par exemple avec un chariot muni de roues. Des moyens peuvent également être disposés pour éviter le déplacement latéral du chariot lors de la coupe.

Un mode de réalisation du dispositif particulièrement adapté à l'exploitation industrielle, mettant en oeuvre le procédé de coupe selon l'invention et dans lequel les plans de coupe des embouts et des crayons sont confondus, comporte un seul chariot porte-lame ayant sur son arête avant (côté élément combustible) la lame de coupe des embouts et sur la face en vis-à-vis de l'élément la lame de coupe des crayons placée dans la cavité, les deux lames coopèrent avec une même contre-lame située contre l'élément à couper.

Dans un tel dispositif, les moyens d'évacuation étant placés à poste fixe sous le plan de coupe et le chariot porte-lame se déplaçant au-dessus du moyen d'évacuation des embouts, des moyens pour diriger les crayons coupés vers le moyen d'évacuation des crayons équipent l'ouverture basse de la cavité. Un moyen simple est constitué par une paroi métallique fixée inclinée vers le moyen d'évacuation des crayons.

On a évidemment toujours intérêt à placer le moyen d'évacuation des crayons le plus près possible du plan de coupe des crayons. Dans la variante avantageuse ci-dessus décrite où les plans de coupe des crayons et embouts sont confondus, le plan de coupe est situé au-dessus du moyen d'évacuation des embouts, le moyen d'évacuation des crayons étant alors accolé à celui des embouts, les moyens de guidage étant placés de sorte que le chariot se déplace le plus près possible du moyen d'évacuation des crayons pour que ceux-ci soient évacués aisément.

De préférence, au plan de coupe des embouts sont associés deux serre-flancs, le serre-flanc principal servant de plaque de référence.

Dans un mode de réalisation avantageux de ces serre-flancs, le serre-flanc principal est formé à partir d'un bloc parallélépipédique évidé de façon à former un épaulement et une face, ladite face étant parallèle à la section transversale de l'élément. La face sert de plaque de référence. Elle a une longueur telle que, lorsque l'épaulement vient en butée contre l'élément (ou contre un support en contact avec l'élément), l'embout est, sur toute sa longueur, au contact de ladite face.

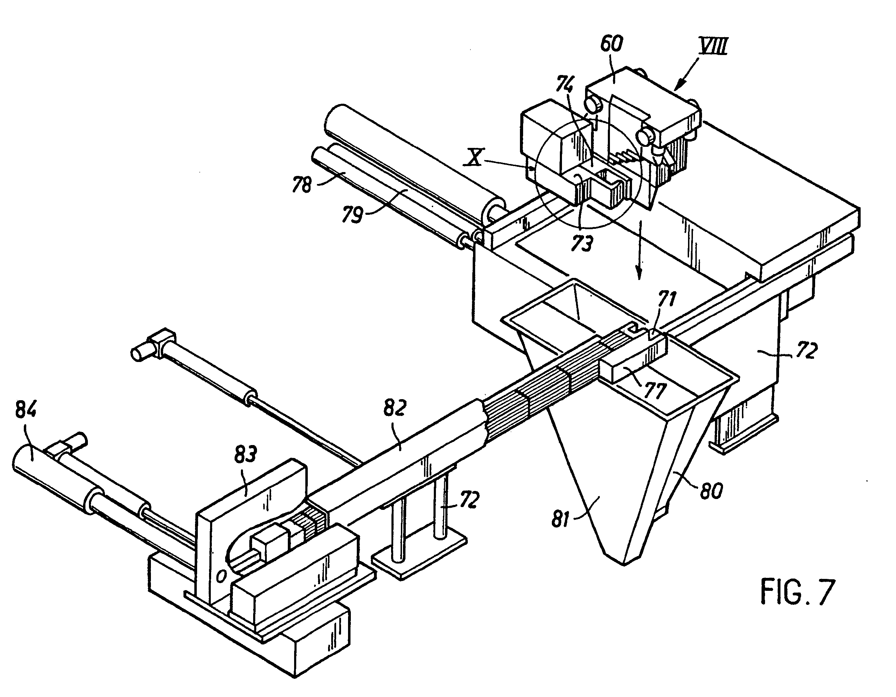

Les figures 7 à 10 représentent un mode de réalisation du dispositif, objet de l'invention, particulièrement avantageux en exploitation industrielle, dans lequel un seul chariot porte-lame supporte les lames de coupe des embouts et des crayons coopérant avec la même contre-lame.

Sur la figure 7, les pièces du dispositif ont été légèrement déplacées en hauteur de façon à faire apparaître mieux leur structure, notamment celle du chariot porte-lame.

Le chariot porte-lame 60 est constitué par une masse en acier approximativement parallélépipédique. Il est muni de roues 61 lui permettant de se déplacer sur des moyens de guidage constitués ici par des rails non représentés sur la figure.

De préférence, et ainsi que la figure le montre, le chariot est suspendu au moyen de guidage, cette disposition permet de désencombrer au voisinage des lames et réduit le risque de dépôt d'éclats ou de poussières par rapport à des moyens de guidage placés sous le chariot.

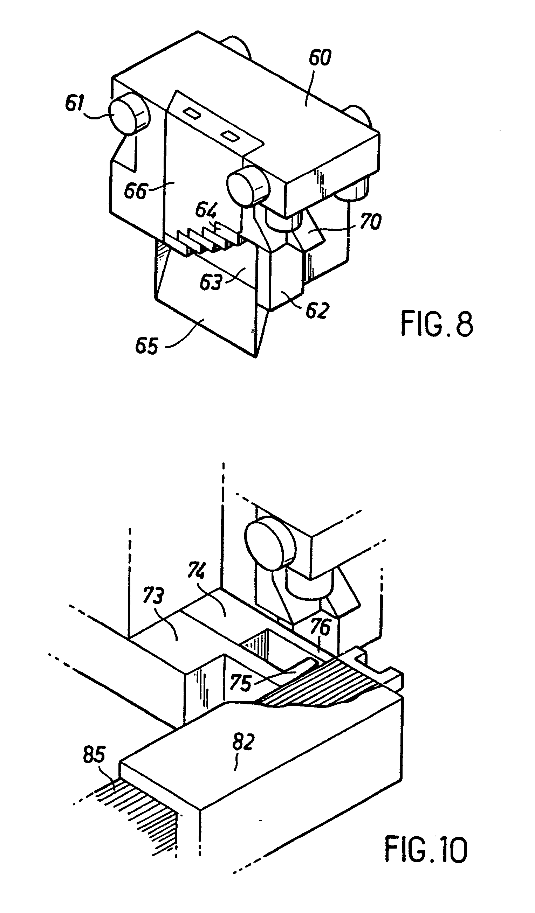

La figure 8 montre le chariot porte-lame plus en détail. La lame de coupe des embouts 62 est constituée par une pièce en acier dur fixée solidement sur l'arête avant du chariot.

Dans le mode de réalisation présenté, le chariot peut se déplacer selon seulement une direction, celle perpendiculaire à l'axe longitudinal de l'élément, la lame de coupe des embouts 62 est alors placée du même côté que la cavité 63 aménagée dans le chariot porte-lame. Elle est constituée à partir d'un évidement dans lequel est venue se placer la lame de coupe des crayons 64, laissant devant elle une cavité 63 de dimensions suffisantes pour que l'élément puisse insérer sa section transversale et sur une longueur de

crayons au moins égale à la longueur de coupe des crayons.

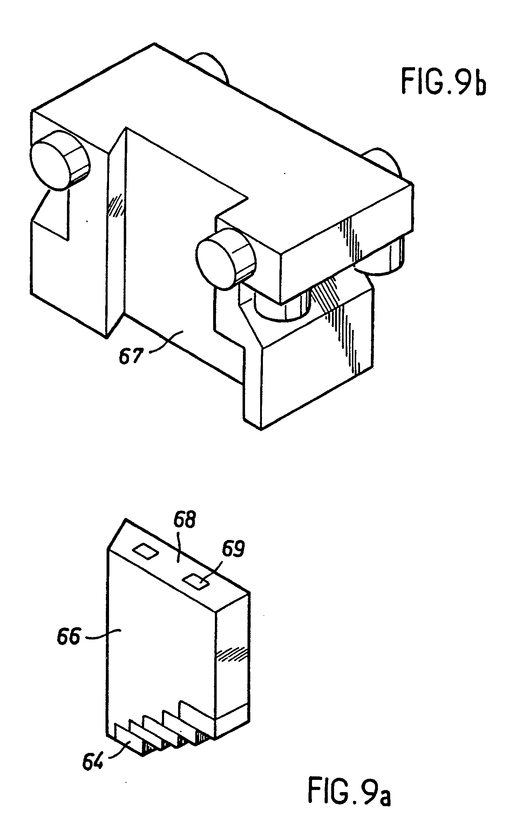

L'ouverture basse de la cavité est équipée d'une paroi inclinée 65, une tôle métallique simple, formant déflecteur pour les crayons coupés. Il est particulièrement avantageux de prévoir une lame de coupe des crayons amovible pouvant être montée et démontée à distance à l'aide de télémanipulateurs. Selon cette disposition avantageuse de l'invention (figure 9), la lame de coupe des crayons 64 est fixée solidement à l'extrémité d'un support de lame 66 (figure 9a), ledit support ayant été formé par découpage dans le chariot porte-lame de sorte qu'il vienne s'insérer exactement dans l'évidement 67 ainsi formé (figure 9b).

Les moyens de verrouillage et déverrouillage peuvent être variés, pour des questions de facilité d'accès, ils sont commandés à partir de la face supérieure 68. Ce pouvait être par exemple des clés de verrouillage commandées par une tige venant s'introduire dans les orifices 69 pour pousser, tourner..., selon le mode de verrouillage choisi.

Egalement pour faciliter la manutention, le chariot porte-lame peut être muni de moyens de levage du chariot, par exemple des oreilles 70 grâce auxquelles le chariot pourra être soulevé au moyen d'élingues et d'un pont par exemple.

Les deux lames coopèrent avec la même contre-lame 71 fixée sur le bâti 72, le plus près possible du chariot porte-lame pour avoir une section de coupe la plus nette possible.

La contre-lame est constituée simplement d'une pièce métallique dure, de préférence montée sur un support de contre-lame 77 (figure 7), ledit support étant alors placé en vis-à-vis du (des) serre-flanc(s) de sorte que le serrage de l'élément ait lieu sous la poussée du (des) serre-flanc (s) contre ledit support.

Selon la figure 10, le serrage est assuré par deux serre-flancs : un serre-flanc principal 74 et un serre-flanc secondaire 73. Pour former plaque de référence, le serre-flanc principal possède une face 76 de longueur égale au côté de l'élément plus l'épaisseur de l'extrémité courbée 75 en forme de L du serre-flanc secondaire.

A partir de la figure 10, on peut décrire le dispositif en position de référence : la partie recourbée 75 du serre-flanc secondaire 73 étant au contact de l'embout, le serre-flanc principal 74 ayant été avancé de façon que son extrémité vienne en butée sur le support de contre-lame (ou la contre-lame elle-même), selon une disposition particulièrement avantageuse du dispositif, ledit serre-flanc 74 est alors également en butée sur la partie recourbée 75, ce qui offre une sécurité supplémentaire, et l'élément peut être amené en appui. Le déplacement de chaque serre-flanc est commandé par un vérin 78, 79 par exemple asservi aux organes de commande. Le déplacement du chariot est également asservi aux organes de commande et est obtenu au moyen d'un moteur adapté par exemple.

Les moyens d'évacuation des embouts et des crayons sont constitués par des trémies 80 et 81 respectivement. Ces trémies sont accolées et sont placées de sorte que le chariot porte-lame se déplace au-dessus du moyen d'évacuation des embouts et le plus près possible de la paroi commune aux trémies.

Dans le mode de réalisation préféré, représenté figure 7, la trémie des embouts 80 est située en avant (dans le sens de l'avancée de l'élément combustible) de celle des crayons et, ce qui est moins visible sur la figure 7, la paroi commune des trémies est située exactement au-dessous du plan de coupe. Les serre-flancs 73 et 74, la contre-lame 71 avec son support 77 et le magasin contenant l'élément combustible (tous montés sur le bâti 72) sont alors situés au-dessus de la trémie des crayons.

Le bâti 72 supporte le jeu de serre-flancs 73 et 74, la contre-lame 71 et son support 77, le support maintenant l'élément combustible avec les moyens de déplacement de l'élément.

Le support maintenant l'élément combustible en position horizontale dans ces représentations est constitué sur la figure 7 par un magasin 82 contenant l'élément combustible 85 muni d'une chaîne pousseuse 83 dont la commande 84 est asservie aux organes de commande.

Le dispositif décrit à partir des figures ne constitue pas une limitation à l'invention.

On peut concevoir des variantes du dispositif revendiqué, dans lesquelles chaque lame est portée par un chariot porte-lame différent se déplaçant soit sur les mêmes moyens de guidage, les lames coopèrent alors avec la même contre-lame (1er cas), soit sur des moyens de guidage différents, les contre-lames étant séparées (2ème cas). Dans le premier cas, le moyen d'évacuation des embouts est placé sous le plan de coupe des embouts, le moyen d'évacuation des crayons est placé à proximité immédiate et la cavité du chariot porte-lame des crayons est munie d'un moyen pour diriger les crayons coupés. Dans le second cas, chaque moyen d'évacuation est placé sous le plan de coupe correspondant.

Ces variantes sont plus difficilement exploitables en environnement nucléaire : elles exigent plus de mécanique et certains moyens mécaniques, nécessaires aux fonctions du dispositif mais ne participant pas directement à la coupe, tels que les vérins..., ne peuvent pas toujours, dans ces variantes, être disposés hors de la cellule de cisaillage - disposition qui a l'avantage de permettre la maintenance en dehors de toute contamination.

Avec le dispositif, objet de l'invention, la coupe de l'élément entier est possible. Il est évident que la coupe d'un élément préalablement débarrassé de ses embouts l'est également : coupe des crayons à l'unité, en bottes...

**Revendications**

1. Procédé pour couper un élément combustible (10) irradié comprenant des crayons combustibles (13) placés entre deux embouts (11,12) dans lequel l'élément combustible en position horizontale est maintenu sur un support (16) de façon à présenter sa section transversale à la coupe, ledit élément pouvant être déplacé des longueurs voulues selon son axe longitudinal, l'élément est également comprimé à proximité immédiate de la section de coupe au moyen d'au moins un serre-flanc (20), la coupe étant effectuée par des moyens de coupe (26,29) se déplaçant sensiblement perpendiculairement à l'axe longitudinal de l'élément et coopérant avec une contre-lame fixe (24) et entre deux coupes, le serre-flanc est désserré, l'élément est avancé de la longueur de coupe voulue, le serre-flanc est resserré caractérisé en ce que :
 – chacun des embouts (11,12) est coupé séparément par le moyen de coupe (26) des embouts et chacun desdits embouts tombe dans le moyen d'évacuation des embouts (A) qui est fixe,
 – les crayons sont ensuite coupés par le moyen de coupe (29) des crayons, la coupe étant effectuée de façon que la section de coupe des crayons soit dans ou en limite d'une cavité (28) pour que les crayons coupés soient confinés dans ladite cavité,
 – et que les crayons coupés sont évacués et dirigés ver le moyen d'évacuation des crayons (B) par une ouverture basse de la cavité (28), ledit moyen étant fixe.

2. Procédé selon la revendication 1, caractérisé en ce que :
 – le premier embout (11) est coupé par l'arête (27) avant du chariot (25) porte-lame de coupe des embouts, ladite arête constituant la lame (26) de coupe des embouts et coopérant avec une contre-lame (24) de coupe des embouts fixe lors de la coupe, ledit chariot (25) se déplaçant au-dessus du moyen d'évacuation des embouts,
 – l'élément est ensuite avancé de façon à venir insérer sa section transversale sur une longueur égale à la longueur de coupe des crayons dans une cavité (28) du chariot porte-lame (25) de coupe des crayons
 – les crayons combustibles (13) sont coupés lors du déplacement du chariot porte-lame des crayons par une lame (29) de coupe des crayons fixée dans ladite cavité (28) et coopérant avec une contre-lame (24) de coupe des crayons fixe lors de la coupe de façon que la section de coupe des crayons soit dans ou en limite de la cavité,
 – puis l'élément est placé de façon que le second embout soit récupéré dans le moyen d'évacuation des embouts.

3. Procédé selon l'une des revendications 1 ou 2, caractérisé en ce que l'élément est inséré dans la cavité (28) de façon que l'un de ses côtés soit pratiquement au contact de la paroi (31) de la cavité (28) opposée au moyen de coupe (29) des crayons, pour que lors du serrage les tubes soient en appui contre ladite paroi.

4. Procédé selon l'une quelconque des revendications précédentes, caractérisé en ce que les plans de coupe des embouts et des crayons sont confondus.

5. Procédé selon la revendication 4, caractérisé en ce que la lame de coupe des crayons (29) et la lame de coupe des embouts (26) sont portées par le même chariot porte-lame (25) et coopèrent avec la même contre-lame (24).

6. Procédé selon l'une quelconque des revendications précédentes, caractérisé en ce qu'une paroi inclinée (33) placée sur l'ouverture basse de la cavité (28) dirige les crayons (13) coupés vers leur moyen d'évacuation (B).

7. Procédé selon la revendication 6, caractérisé en ce que le moyen d'évacuation des embouts (A) se trouve en avant (dans le sens de l'avancée de l'élément) de celui des crayons (B).

8. Procédé selon l'une quelconque des revendications précédentes, caractérisé en ce que, lors de son placement en position de coupe, l'élément est avancé jusqu'en butée sur une plaque de référence à partir de laquelle sont comptabilisées ses longueurs de déplacement.

9. Procédé selon la revendication 8, caractérisé en ce que le serre-flanc principal (20) constitue la plaque de référence.

10. Dispositif pour couper, selon le procédé de l'une quelconque des revendications précédentes, un élément combustible irradié (10), ledit élément comprenant des crayons combustibles (13) placés entre deux embouts (11, 12), ledit dispositif comprenant :

– un support (16) sur lequel est maintenu l'élément (10) qui présente sa section transversale à la coupe,

– des moyens (17) agissant sur ledit élément et commandés de façon à faire avancer l'élément des longueurs voulues dans la direction de son axe longitudinal,

– au moins un serre-flanc (20) mobile placé à proximité immédiate de chaque plan de coupe et en vis-à-vis d'une butée, de façon à comprimer les parties de l'élément placées entre, la coupe ayant lieu immédiatement derrière ces parties comprimées,

– des moyens de coupe (26,29) des crayons et des embouts,

– des moyens pour évacuer les embouts (A) et des moyens pour évacuer les crayons (B) coupés vers le dissolveur,

– des moyens de commande automatique,

caractérisé en ce que le moyen de coupe des crayons, (29) distinct du moyen de coupe des embouts, (26) est logé dans ou en limite d'une cavité, (28), de façon que la section de coupe des crayons soit dans ou en limite de ladite cavité, qui comporte une ouverture basse par laquelle sont évacués les crayons coupés, les moyens d'évacuation des embouts (A) et des crayons (B) étant distincts et fixés sous le dispositif.

11. Dispositif selon la revendication 10, caractérisé en ce que :

– le moyen de coupe des embouts (26) est constitué par une lame de coupe des embouts portée par l'arête (27) avant (dans le sens du déplacement pour couper) d'un chariot (25) porte-lame de coupe des embouts,

– le moyen de coupe des crayons (29) est constitué par une lame de coupe des crayons située dans un évidement (28) aménagé sur la face d'un chariot (25) porte-lame de coupe des crayons, ladite lame étant placée de façon à laisser en avant (dans le sens de la coupe) de sa face coupante une cavité de longueur et de hauteur au moins égales aux dimensions correspondantes de l'élément en vis-à-vis, ladite cavité ayant une profondeur au moins égale à la longueur de coupe des crayons,

– ladite cavité comporte une ouverture basse pour évacuer les crayons vers le moyen d'évacuation des crayons placé à proximité du plan de coupe des crayons,

– les chariots porte-lame de coupe des embouts et des crayons se déplacent sur des moyens de guidage disposés de façon que le chariot porte-lame de coupe des embouts se déplace au-dessus du moyen d'évacuation des embouts, et

– lesdits moyens d'évacuation sont fixés sous ledit dispositif.

12. Dispositif selon l'une des revendications 10 ou 11, caractérisé en ce que le moyen de coupe (29) des crayons constitue une paroi de l'évidement (28).

13. Dispositif selon l'une quelconque des revendications 10 à 12, caractérisé en ce que les crayons coupés sont dirigés vers leur moyen d'évacuation par une paroi inclinée (33) vers le moyen d'évacuation des crayons placée au niveau de l'ouverture basse de la cavité (28).

14. Dispositif selon la revendication 13, caractérisé en ce que le chariot porte-lame (25) de coupe des crayons se déplace également sur des moyens de guidage situés au-dessus du moyen d'évacuation des embouts.

15. Dispositif selon l'une quelconque des revendications 11 à 14, caractérisé en ce que les lames de coupe des crayons (29) et des embouts (26) sont portées par le même chariot porte-lame (25) et coopèrent avec la même contre-lame (24).

16. Dispositif selon l'une quelconque des revendications 10 à 15, caractérisé en ce que deux serre-flancs (20, 21) sont associés au plan de coupe des embouts, le serre-flan principal constituant également une plaque de référence.

17. Dispositif selon l'une quelconque des revendications 10 à 16, caractérisé en ce que le moyen de coupe des crayons comporte une face coupante en biais.

18. Dispositif selon l'une quelconque des revendications 10 à 17, caractérisé en ce que le moyen de coupe des crayons comporte des couteaux agencés en escalier.

19. Dispositif selon l'une quelconque des revendications 10 à 18, caractérisé en ce que le moyen de coupe des crayons comporte des dents de scie.

20. Dispositif selon l'une quelconque des revendications 10 à 19, caractérisé en ce que le moyen de coupe des crayons est télédémontable à distance.

21. Dispositif selon la revendication 20, caractérisé en ce que la lame de coupe des crayons est fixée sur un support, ledit support pouvant s'emboîter exactement dans un évidement du chariot porte-lame aménagé sur l'une de ses faces et sur toute la hauteur dudit chariot, et des moyens de verrouillage télédémontables étant prévus entre ledit support et ledit chariot.

## Claims

1. Method of cutting an irradiated fuel element (10) comprising fuel rods (13) placed between two end pieces (11,12), in which the fuel element is maintained on a support (16) in the horizontal position in order to present its cross-section for cutting, said element being displaceable in desired lengths along its longitudinal axis, the element also being compressed in the immediate vicinity of the cutting section by means of at least one side clamp (20), cutting being performed by cutting means (26,29) which are displaced substantially perpendicularly to the longitudinal axis of the element and which co-operate with a fixed backing blade (24), with the side clamp being unclamped between two cutting actions, with the element being advanced by the desired length to be cut off, and with the side clamp being reclamped, the method being characterized in that:
   – each end piece (11,12) is cut off separately by end piece cutting means (26) and each of said end pieces falls into fixed end piece removal means (A),
   – the rods are then cut up by the rod-cutting means (29), cutting being performed in such a manner that the cutting section of the rods lies within or at the limit of a cavity (28) such that the cut-off lengths of rod are confined within said cavity, and
   – the cut-off rods are removed and directed towards rod removal means (B) via a bottom opening of the cavity (28), said removal means being fixed.

2. Method according to claim 1, characterized in that:
   – the first end piece (11) is cut off by the front edge (27) of a carriage (25) for carrying an end piece cutting blade, said edge constituting the end piece cutting blade (26) and co-operating with an end piece cutting backing blade (24) which is fixed during cutting, said carriage (25) moving over the end piece removal means,
   – the fuel element is then advanced so as to insert its cross-section over a length equal to the cut-off length of the rods within a cavity (28) in the carriage for carrying the rod-cutting blade (25), ,
   – the fuel rods (13) are cut during displacement of the carriage for carrying the rod-cutting blade by a rod-cutting blade (29) which is fixed in said cavity (28) and which co-operates with a rod-cutting backing blade (24) which is fixed during cutting in such a manner that the rod-cutting backing blade lies within or is at the limit of the cavity,
   – the element is then placed so that the second end fitting is recovered by the end fitting removal means.

3. Method according to one of claims 1 or 2, characterized in that the fuel element is inserted into the cavity (28) in such a manner that one of its sides is practically in contact with the wall (31) of the cavity (28) opposite to the rod-cutting means (29) so that during clamping the tubes are pressed against said wall.

4. Method according to any one of the preceding claims, characterized in that the end piece cutting plane and the rod-cutting plane are constituted by the same plane.

5. Method according to claim 4, characterized in that the rod-cutting blade (29) and the end piece cutting blade (26) are carried on the same blade-carrying carriage (25) and in that both blades co-operate with the same backing blade (24).

6. Method according to any one of the preceding claims, characterized in that a sloping wall (33) is placed over the bottom opening of the cavity (28) to direct the cut rods (13) towards the rod removal means (B).

7. Method according to claim 6, characterized in that the end piece removal means (A) is disposed ahead (in the element advancing direction) of the rod removal means (B).

8. Method according to any one of the preceding claims, charactterized in that, while being placed in cutting position, the element is advanced until it comes into abutment against a reference plate from which its displacement length are calculated.

9. Method according to claim 8, characterized in that the reference plate is constituted by the main side clamp (20).

10. Apparatus for cutting an irradiated fuel element (10) according to the method of any one of the preceding claims, said fuel element comprising fuel rods (13) placed between two end pieces (11,12), said apparatus comprising:

     – a support (16) for supporting the fuel element (10) whose cross-section is being presented for cutting,

     – means (17) acting on said fuel element and controlled in such a manner as to cause the element to advance by desired lengths in the direction of its longitudinal axis,

     – at least one moving side clamp (20) placed in immediate proximity of each cutting plane and facing an abutment, in such a manner as to compress the portions of the fuel element placed between, with cutting taking place immediately behind these compressed portions,

     – means (26,29) for cutting off the rods and end pieces,

     – means for removing the end pieces (A) and means for removing cut-up rods (B) while directing them to the dissolver,

     – automatic control means,

characterized in that the means for cutting up the rods (29) is distinct from the means for cutting up the end pieces (26) and is received in or at the limit of a cavity (28) such that the section along which the rods are cut lies within or at the limit of said cavity, said cavity including a bottom opening through which the cut-off rods are removed, with the means for removing the end pieces (A) and the means for removing the rods (B) being distinct and fixed beneath the apparatus.

11. Apparatus according to claim 10, characterized in that:

     – the means for cutting off the end pieces (26) is constituted by an end piece cutting blade carried by the leading edge (27) of a carriage (25) for carrying the end piece cutting blade (in the direction of cutting displacement),

     – the means for cutting up the rods (29) is constituted by a rod-cutting blade situated in a hollow (28) provided in the face of a carriage (25) carrying the rod-cutting blade, said blade being placed in such a manner as to leave a cavity ahead of its cutting face (in the cutting direction) with length and height of the cavity being not less than the corresponding dimensions of the facing fuel element, said cavity having a depth which is not less than the length of the rods to be cut off,

     – said cavity including a bottom opening through which the cut-off rods are removed towards the rod-removal means placed in the vicinity of the rod-cutting plane,

     – the carriages for carrying the end piece cutting blade and the rod-cutting blade being displaced over guide means disposed in such a manner that the carriage for carrying the end piece cutting blade moves over the end piece removal means, and

     – said removal means are fixed beneath said apparatus.

12. Apparatus according to one of claims 10 or 11, characterized in that the rod-cutting means (29) constitutes one of the walls of the cavity (28).

13. Apparatus according to any one of claims 10 to 12, characterized in that the cut-off rods are directed towards their rod-removal means by a wall (33) which slopes towards the rod-removal means and which is placed at the bottom opening of the cavity (28).

14. Apparatus according to claim 13, characterized in that the carriage (25) for carrying the rod-cutting blade moves likewise over guide means situated over the end piece removal means.

15. Apparatus according to any one of claims 11 to 14, characterized in that the blades for cutting up the rods (29) and for cutting off the end pieces (26) are carried by the same blade-carrying carriage (25) and co-operate with the same backing blade (24).

16. Apparatus according to any one of claims 10 to 15, characterized in that two side clamps (20, 21) are associated with the end piece cutting plane, with the main side clamp also constituting a reference plate.

17. Apparatus according to any one of claims 10 to 16, characterized in that the rod-cutting means includes a slanting cutting face.

18. Apparatus according to any one of claims 10 to 17, characterized in that the rod-cutting means includes knives disposed in a staircase configuration.

19. Apparatus according to any one of claims 10 to 18, characterized in that the rod-cutting means includes knives disposed in a sawtooth configuration.

20. Apparatus according to any one of claims 10 to 19, characterized in that the rod-cutting means is suitable for being remotely dismantled.

21. Apparatus according to claim 20, characterized in that the rod-cutting blade is fixed on a support, said support being suitable for being exactly received in a slot in the blade-carrying carriage, said slot being provided in one of the faces of the carriage and extending over its full height, together with locking means capable of being assembled from a distance for locking said support to said carriage.

**Patentansprüche**

1. Verfahren zum Schneiden von verstrahlten Brennelementen (10), mit Brennstäben (13), die zwischen zwei Endstücken (11, 12) gesetzt sind, in denen das Brennelement in horizontaler Stellung auf einer Stütze (16) derart gehalten ist, daß es seinen Querschnitt dem Schnitt aussetzt, wobei das Element um gewählte Längen versetzt werden kann, entlang seiner Längsachse, wobei das Element jedenfalls in der unmittelbaren Nähe des Schnittabschnitts mittels wenigstens eines Klemmflansches (20) zusammengedrückt wird, wobei der Schnitt mittels Schneideeinrichtungen (26, 29) durchgeführt wird, die sich im wesentlichen senkrecht zur Längsachse des Elements bewegen und mit einer festen Gegenklinge (24) zusammenwirken, und zwischen zwei Schnitten der Klemmflansch gelöst wird, wobei das Element um die vorgewählte Schnittlänge vorgeschoben wird, der Klemmflansch erneut geklemmt wird, **dadurch gekennzeichnet, daß**

– jedes der Endstücke (11, 12) getrennt geschnitten wird mittels der Schneideeinrichtung (26) der Endstücke und jedes der Endstücke in eine Ausbringeinrichtung der Endstücke (A) fällt, die befestigt ist,

– die Stäbe sodann mittels der Schneideeinrichtung (29) der Stäbe geschnitten werden, wobei der Schnitt derart ausgeführt wird, daß der Schnittquerschnitt der Stäbe in oder an der Grenze eines Hohlraums (28) ausgeführt wird, damit die geschnittenen Stäbe in den Hohlraum eingetaucht sind,

– und daß die geschnittenen Stäbe ausgebracht werden und ausgerichtet werden nach der Ausbringeinrichtung der Stäbe (13) durch eine untere Öffnung des Hohlraums (28), wobei diese Einrichtung fest ist.

2. Verfahren nach Anspruch 1, **dadurch gekennzeichnet**, daß das erste Endstück (11) durch die Vorderkante (27) des Schneidklingenträgerschlittens (25) der Endstücke getragen wird, wobei die Kante der Schneidklinge (26) der Endstücke bildet und mit einer Gegenschneidklinge (24) der festen Endstücke beim Schnitt zusammenwirkt, wobei der Schlitten (25) sich oberhalb der Ausbringeinrichtung der Endstücke bewegt,

– das Element sodann derart vorbewegt wird, daß sein sich Querschnitt auf einer Länge, die gleich der Schnittlänge der Stäbe ist, in den Hohlraum (28) des Schneidklingenträgerschlitten (25) der Stäbe hineinerstreckt,

– die Brennstäbe (13) beim Bewegen des Klingenträgerschlittens der Stäbe durch eine Schneidklinge (29) der Stäbe geschnitten werden, die in dem Hohlraum (28) befestigt sind, und mit einer Gegenschneidklinge (24) der festen Stäbe zusammenwirkt, bei dem Schnitt derart, daß der Schnittquerschnitt der Stäbe im oder am Rande des Hohlraums sich befindet,

– sodann das Element derart gesetzt wird, daß das zweite Endstück in der Ausbringeinrichtung der Endstücke aufgenommen wird.

3. Verfahren nach Anspruch 1 oder 2, **dadurch gekennzeichnet**, daß das Element in den Hohlraum (28) derart eingeführt wird, daß eine seiner Seiten praktisch in Berührung ist mit der Seitenwand (31) des Hohlraums (28) gegenüber der Schneideinrichtung (29) der Stäbe, damit beim Klemmen die Rohre in Anschlag gegen die Seitenwand sind.

4. Verfahren nach einem der vorhergehenden Ansprüche, **dadurch gekennzeichnet**, daß die Schneidebenen der Endstücke und der Brennstäbe zusammenfallen.

5. Verfahren nach Anspruch 4, **dadurch gekennzeichnet**, daß die Schneidklinge der Stäbe (29) und die Schneidklinge der Endstücke (26) von demselben Schneidklingenschlitten (25) getragen werden und mit derselben Gegenklinge (24) zusammenwirken.

6. Verfahren nach einem der vorhergehenden Ansprüche, **dadurch gekennzeichnert**, daß eine geneigte Seitenwand (33), die auf der unteren Öffnung des Hohlraums (28) gesetzt ist, die geschnittenen Stäbe (13) zu ihrer Ausbringeinrichtung (B) leitet.

7. Verfahren nach Anspruch 6, **dadurch gekennzeichnet**, daß die Ausbringeinrichtung der Endstücke (A) sich vor jener der Stäbe (B) (in der Richtung des Vorschubs des Elements) befindet.

8. Verfahren nach einem der vorhergehenden Ansprüche, **dadurch gekennzeichnet**, daß das Element bei seinem Inschnittstellungbringen bis zum Anschlag auf eine Referenzplatte vorgeschoben wird, von der aus seine Verschiebelängen angeglichen werden.

9. Verfahren nach Anspruch 8, **dadurch gekennzeichnet**, daß der Hauptklemmflansch (20) die Referenzplatte bildet.

10. Vorrichtung zum Schneiden, nach dem Verfahren von einem der vorhergehenden Ansprüche, eines verstrahlten Brennelements (10), wobei das Element Brennstäbe (13) aufweist, die zwischen zwei Endstücken (11, 12) angeordnet sind, wobei die Vorrichtung aufweist:

– eine Stütze (16), auf der ein Element (10) gehalten wird, das seinen Querschnitt dem Schnitt zuwendet,

– Einrichtungen (17), die auf das Element einwirken und derart gesteuert sind, daß sie das Element um gewählte Längen in Richtung seiner Längsachse vorbewegen,

– wenigstens einen bewegbaren Klemmflansch (20), der in der unmittelbaren Nähe einer jeden Schneidebene und gegenüber eines Anschlags angeordnet ist, derart, daß er die dazwischenliegenden Bereiche des Elements zusammendrückt, wobei der Schnitt unmittelbar hinter den zusammengedrückten Bereichen erfolgt,

– Schneideinrichtungen (26, 29) der Brennstäbe und der Endstücke,

– Einrichtungen zum Ausbringen der Endstücke (A) und Einrichtungen zum Ausbringen der geschnittenen Stäbe (B) zu dem Auflöser,

– automatische Steuereinrichtungen,

dadurch gekennzeichnet, daß die Schneideinrichtung der Stäbe (29), die getrennt ist von der Schneideinrichtung der Endstücke (26), in oder am Rande eines Hohlraums (28) derart angeordnet ist, daß der Schnittquerschnitt der Stäbe in oder an der Grenze des Hohlraums sich befindet, der eine untere Öffnung aufweist, durch die die geschnittenen Stäbe ausgebracht werden, wobei die Ausbringeinrichtungen der Endstücke (A) und der Stäbe (B) voneinander getrennt sind und unter der Vorrichtung befestigt sind.

11. Vorrichtung nach Anspruch 10, **dadurch gekennzeichnet, daß:**

– die Schneideeinrichtung der Endstücke (26) gebildet wird aus einer Schneidklinge der Enstücke, getragen durch die vordere Kante (27) (in Richtung der Bewegungsrichtung zum Schneiden) eines Wagens oder Schlittens (25) der Schneidklingen der Endstücke,

– die Schneideinrichtung der Stäbe (29) gebildet wird aus einer Schneidklinge der Stäbe, die in einer Ausnehmung (28) angeordnet ist, die in der Seite eines Schhneidsklingenträgerschlittens (25) der Stäbe ausgebildet ist, wobei die Klinge derart angeordnet wird, daß sie vorne (in Schneiderichtung) seiner schneidenden Seite einen Hohlraum der Länge und Höhe freiläßt von wenigstens gleich den entsprechenden Abmessungen des gegenürliegenden Elements, wobei der Hohlraum eine Tiefe aufweist, die wenigstens gleich der Schnittlänge der Stäbe ist,

– der Hohlraum eine untere Öffnung aufweist, um die Stäbe zur Ausbringeinrichtung der Stäbe auszubringen, die in der Nähe der Schneidebene der Stäbe angeordnet ist,

– die Schneidklingenträgerschlitten der Endstücke und der Stäbe sich auf Fürhrungseinrichtungen bewegen, die derart angeordnet sind, daß der Schneidklingenträgerschlitten der Endstücke sich oberhalb der Ausbringeinrichtung der Endstücke bewegt, und

– die Ausbringeinrichtungen unter der Vorrichtung befestigt sind.

12. Vorrichtung nach einem der Ansprüche 10 oder 11, **dadurch gekennzeichnert,** daß die Schneideinrichtung (29) der Stäbe eine Seitenwand der Ausnehmung (28) bildet.

13. Vorrichtung nach einem der Ansprüche 10 bis 12, dadurch gekennzeichnet, daß die abgeschnittenen Stäbe zu ihrer Ausbringeinrichtung durch eine geneigte Seitenwand (33) auf die Ausbringeinrichtung der Stäbe zu gerichtet sind, die auf der Höhe der unteren Öffnung des Hohlraums (28) angeordnet ist.

14. Vorrichtung nach Anspruch 13, **dadurch gekennzeichnet,** daß der Schneidklingenträgerschlitten der Stäbe sich ebenfalls auf der Führungseinrichtung bewegt, die oberhalb der Ausbringeinrichtung der Endstücke angeordnet ist.

15. Vorrichtung nach einem der Ansprüche 11 bis 14. **dadurch gekennzeichnet,** daß die Schneidklingen der Stäbe (29) und der Enstücke (26) von demselben Klingenträgerschlitten (25) getragen werden und mit derselben Gegenklinge (24) zusammenwirken.

16. Vorrichtung nach einem der Ansprüche 10 bis 15, **dadurch gekennzeichnet,** daß zwei Klemmflansche (20, 21) der Schneidebene der Endstücke zugeordnet sind, wobei der Hauptklemmflansch ebenfalls eine Referenzplatte bildet.

17. Vorrichtung nach einem der Ansprüche 10 bis 16, **dadurch gekennzeichnet,** daß die Schneideinrichtung der Stäbe eine schräge Schneidseite aufweist.

18. Vorrichtung nach einem der Ansprüche 10 bis 17, **dadurch gekennzeichnet,** daß die Schneideinrichtung der Stäbe treppenartig angeordnete Messer aufweist.

19. Vorrichtung nach einem der Ansprüche 10 bis 18, **dadurch gekennzeichnet,** daß die Schneideinrichtung der Stäbe Sägezähne aufweist.

20. Vorrichtung nach einem der Ansprüche 10 bis 19, **dadurch gekennzeichnet,** daß die Schneideinrichtung der Stäbe fernentfernbar ist.

21. Vorrichtung nach Anspruch 20, **dadurch gekennzeichnet,** daß die Schneidklinge der Stäbe auf einem Träger befestigt ist, wobei der Träger exakt sich in eine Ausnehmung des Klingenträgerschlittens einfügen kann, die auf einem seiner Seiten und über die gesamte Höhe des Schlittens ausgebildet ist, und wobei fernentfernbare Verriegelungseinrichtungen zwischen dem Träger und dem Schlitten vorgesehen sind.

FIG.1

15

FIG. 2

FIG. 3a

FIG. 3b

FIG. 3c

FIG. 3d

28  29

A

B

FIG.4a

30
31

FIG.4b

32

FIG.4c

FIG.4d

FIG.5

FIG.6a

FIG.6b

FIG.6c

FIG.6d

FIG.6e

FIG.6f

FIG. 7

EP 0 279 741 B1

FIG.8

FIG.10

FIG.9b

67

68

69

66

64

FIG.9a